# EUROPÄISCHE PATENTSCHRIFT

(11) **EP 3 807 122 B1**
(45) Veröffentlichungstag und Bekanntmachung des Hinweises auf die Patenterteilung: **15.11.2023**
(21) Anmeldenummer: 19745039.8
(22) Anmeldetag: 06.06.2019
(51) Int. Cl.: B60L 53/16, H01R 13/639

(54) **VERRIEGELUNGSVORRICHTUNG FÜR EINE ELEKTRISCHE LADEVORRICHTUNG EINES KRAFTFAHRZEUGES**
LOCKING DEVICE FOR AN ELECTRIC CHARGING DEVICE OF A MOTOR VEHICLE
DISPOSITIF DE VERROUILLAGE POUR UN DISPOSITIF DE RECHARGE ÉLECTRIQUE D'UN VÉHICULE À MOTEUR

(30) Priorität: 14.06.2018 DE 102018114205
(43) Veröffentlichungstag der Anmeldung: 21.04.2021
(73) Patentinhaber: Kiekert AG, 42579 Heiligenhaus (DE)
(72) Erfinder: TÖPFER, Claus, 71063 Sindelfingen (DE); ÖZDOGAN, Fatih, 42329 Wuppertal (DE)
(86) Internationale Anmeldenummer: PCT/DE2019/100512
(87) Internationale Veröffentlichungsnummer: WO 2019/238167

(56) Entgegenhaltungen:
- EP-A2- 2 602 879
- EP-A2- 3 203 592
- DE-A1-102010 061 185
- DE-A1-102013 110 428
- DE-B3-102012 022 413
- DE-U1-202013 009 554

## Beschreibung

Die Erfindung betrifft eine Verriegelungsvorrichtung für eine elektrische Ladevorrichtung eines Kraftfahrzeuges, insbesondere eines Elektro- oder Hybridkraftfahrzeuges, mit einem verfahrbaren Riegelelement, das dazu vorgesehen ist, einen Ladestecker in einer Ladesteckdose der elektrischen Ladevorrichtung lösbar zu verriegeln, und mit einem motorischen Antrieb zur Verstellung des Riegelelementes.

Akkumulatoren von Elektro- oder Hybridkraftfahrzeugen müssen regelmäßig mit elektrischer Energie versorgt werden. Das geschieht unter Rückgriff auf eine Ladeinfrastruktur, zu welcher typischerweise Ladesäulen gehören. Für den Ladevorgang mit elektrischer Energie wird der Ladestecker der Ladesäule im Allgemeinen mit einer kraftfahrzeugseitigen Ladesteckdose gekoppelt und lösbar verriegelt. Die Verriegelung ist erforderlich, um beispielsweise Gesundheitsgefährdungen zu vermeiden, da an dieser Stelle im Allgemeinen mit Hochspannung gearbeitet wird. Außerdem stellt die Verriegelung sicher, dass ausschließlich zuvor identifizierte Benutzer die von der Ladesäule zur Verfügung gestellte Energie auch rechtmäßig beziehen und Missbrauch verhindert wird. Zu diesem Zweck findet meistens vor einem solchen Ladevorgang eine Identifizierung des Bedieners und eine Berechtigungsprüfung mit Hilfe eines Identifikationssignals statt, wie dies grundsätzlich in der WO 2010/149426 A1 beschrieben wird.

Die Verstellung des Riegelelementes wird im Stand der Technik nach der CN 2020695855 U mit Hilfe eines elektromotorischen Antriebes vorgenommen. Der elektromotorische Antrieb setzt sich seinerseits aus einem Elektromotor und einem nachgeschalteten mehrstufigen Getriebe zusammen. Das mehrstufige Getriebe arbeitet über einen Nocken auf das Riegelelement.

Aus der DE 10 2010 0611 185 A1 ist eine Verriegelungsvorrichtung für eine elektrische Ladevorrichtung eines Kraftfahrzeuges, insbesondere eines Elektro- oder Hybridkraftfahrzeuges, mit einem verfahrbaren Riegelelement, das dazu vorgesehen ist, einen Ladestecker in einer Ladesteckdose der elektrischen Ladevorrichtung lösbar zu verriegeln, und mit einem motorischen Antrieb zur Verstellung des Riegelelementes, wobei der motorische Antrieb als Bestandteil eines mit einem Lademodul im Zuge der Montage verbindbaren modulartigen Verriegelungsaktuators ausgebildet ist, bekannt.

Darüber hinaus sind vergleichbare Lösungen im gattungsbildenden Stand der Technik nach der DE 10 2011 010 809 A1 bekannt. An dieser Stelle ist eine Verriegelungsvorrichtung realisiert, die mit einem mechanischen Riegel arbeitet. Der mechanische Riegel kann elektromotorisch betrieben werden. Auf diese Weise greift der mechanische Riegel in Nuten im Ladestecker ein und sorgt so dafür, dass der Stecker bzw. Ladestecker mit Hilfe der Verriegelungseinrichtung im Innern der Ladesteckdose verriegelt wird.

Eine ähnliche Lösung wird in der DE 10 2009 030 092 A1 beschrieben. Auch in diesem Fall ist ein Stecker vorgesehen, der in einer Buchse verriegelt werden kann. Über den Stecker bzw. Ladestecker lässt sich auch eine Identifikation des Benutzers erreichen. Außerdem sind Verriegelungsmittel vorgesehen, mit deren Hilfe der Ladestecker in der Ladesteckdose der Ladestation verriegelt werden kann. Für den Antrieb der Verriegelungsmittel sorgt ein elektromotorischer Antrieb.

Auf diese Weise lassen sich zumindest und ganz grundsätzlich die beiden Positionen "entriegelt" und "verriegelt" des Riegelelementes realisieren und vorgeben. In der Position "entriegelt" des Riegelelementes kann der Ladestecker von der Ladesteckdose entfernt werden. Die Position "verriegelt" stellt demgegenüber sicher, dass der Ladestecker gegenüber der Ladesteckdose verriegelt und gesichert ist. Diese Position wird typischerweise erst dann eingenommen, wenn eine zuvor vorgesehene Benutzeridentifikation erfolgreich absolviert worden ist und auch die Bezahlung der entnommenen elektrischen Energie sichergestellt ist. Erst dann wird der Ladevorgang gestartet, nachdem das Riegelelement dafür gesorgt hat, dass der Ladestecker gegenüber der Ladesteckdose verriegelt worden ist.

Die nachfolgenden Erwägungen gehen davon aus, dass die Ladesteckdose kraftfahrzeugseitig vorgesehen ist und der im Allgemeinen über eine elektrische Verbindungsleitung mit der Ladesäule gekoppelte Ladestecker mit der kraftfahrzeugseitigen Ladesteckdose gekoppelt und gegenüber dieser lösbar verriegelt wird. Grundsätzlich ist es natürlich auch möglich, dass die Ladesteckdose an der Ladesäule realisiert ist und das betreffende Elektro- oder Hybridkraftfahrzeug mit einer eigenen elektrischen Verbindungsleitung mit endseitigem Ladestecker gegenüber der Ladesteckdose an der Ladesäule verriegelt wird. Im Allgemeinen wird jedoch mit einer kraftfahrzeugseitigen Ladesteckdose gearbeitet, in welche der an die Ladesäule angeschlossene Ladestecker lösbar eingreift und gegenüber dieser verriegelt wird.

Die kraftfahrzeugseitige Ladesteckdose muss zu diesem Zweck zusammen mit dem motorischen Antrieb und dem Riegelelement an einer Karosserie eines Kraftfahrzeuges montiert werden. Das geschieht typischerweise im Bereich einer Karosserieöffnung. Zu diesem Zweck werden beispielsweise elektrische Zuleitungen für den motorischen Antrieb ausgehend vom Bordnetz bis hin zum motorischen Antrieb verlegt. Die elektrischen Zuleitungen sind dabei im Allgemeinen als Bestandteil eines ohnehin im Kraftfahrzeug verbauten Kabelbaumes ausgelegt. Als Folge hiervon gestalten sich der Ein- und Zusammenbau, also generell die Montage der Verriegelungsvorrichtung und insbesondere der Ladesteckdose inklusive Riegelelement sowie ihre elektrische Kontaktierung teilweise schwierig und zeitaufwändig. Hier will die Erfindung insgesamt Abhilfe schaffen.

Der Erfindung liegt das technische Problem zugrunde, eine derartige Verriegelungsvorrichtung für eine elektrische Ladevorrichtung eines Kraftfahrzeuges so weiter zu entwickeln, dass der Einbau und die Montage einfach und schnell vonstattengehen.

Zur Lösung dieser technischen Problemstellung ist eine gattungsgemäße Verriegelungsvorrichtung für eine elektrische Ladevorrichtung eines Kraftfahrzeuges im Rahmen der Erfindung dadurch gekennzeichnet, dass der motorische Antrieb als Bestandteil eines mit einem Lademodul im Zuge der Montage verbindbaren modulartigen Verriegelungsaktuators ausgebildet ist.

Erfindungsgemäß umfassen die elektrische Ladevorrichtung des Kraftfahrzeuges und insbesondere Elektro- oder Hybridkraftfahrzeuges also ganz grundsätzlich und zunächst einmal das verfahrbare Riegelelement, die Ladesteckdose und den motorischen Antrieb zur Verstellung des Riegelelementes. Der Verriegelungsaktuator umfasst dabei vorteilhaft neben dem motorischen Antrieb zusätzlich das Riegelelement. Auf diese Weise setzt sich die elektrische Ladevorrichtung des Kraftfahrzeuges im Rahmen der Erfindung einerseits aus dem Lademodul und andererseits dem Verriegelungsaktuator zusammen, die im Zuge der Montage miteinander gekoppelt werden. Während das Lademodul überwiegend die Ladesteckdose aufweist, umfasst der Verriegelungsaktuator im Allgemeinen den motorischen Antrieb und das Riegelelement.

Darüber hinaus ist der motorische Antrieb erfindungsgemäß mit dem Elektromotor und meistens noch einem daran angeschlossenen Getriebe zur Beaufschlagung des Riegelelementes ausgerüstet. Mit Hilfe des Getriebes wird im Allgemeinen eine schnelle Drehbewegung ausgangsseitig einer Abtriebswelle des Elektromotors in eine langsame Linearbewegung des Riegelelementes umgewandelt. Denn das Riegelelement wird meistens zur Einnahme der Positionen "entriegelt" und "verriegelt" in Linearrichtung bewegt.

Um die Drehbewegung der schnelllaufenden Abtriebswelle des Elektromotors in die entsprechende Linearbewegung des Riegelelementes umzuwandeln, kann das Riegelelement mit einer Gabelaufnahme für einen hierin eingreifenden Zapfen als Bestandteil eines Kurbeltriebes oder allgemein als Bestandteil des an den Elektromotor angeschlossenen Getriebes zur Beaufschlagung des Riegelelementes ausgerüstet sein. Das gilt selbstverständlich nur beispielhaft und ist keineswegs einschränkend.

Von besonderer Bedeutung für die Erfindung ist nun der Umstand, dass das im Allgemeinen den motorischen Antrieb und zusätzlich das Riegelelement umfassende Verriegelungsaktuator mit Steckkontakten ausgerüstet ist. Die Steckkontakte greifen im Zuge der Montage des Verriegelungsaktuators am Lademodul in zumindest eine zugehörige Steckbuchse im Lademodul ein. Grundsätzlich kann auch umgekehrt verfahren werden. In diesem Fall ist nicht der Verriegelungsaktuator mit Steckkontakten ausgerüstet, sondern vielmehr mit der Steckbuchse, welche dann in im Lademodul vorgesehene Steckkontakte eingreift. Die Steckbuchse ist ihrerseits meistens fest mit einer Leiterplatte oder Leiterplatine eines Steuergerätes der Ladesteckdose verbunden.

Erfindungsgemäß wird jedoch so vorgegangen, dass der Verriegelungsaktuator die Steckkontakte aufweist. Dabei sind die Steckkontakte in einem Steckvorsprung eines Verriegelungsaktuatorgehäuses angeordnet. Auf diese Weise sorgen die Steckkontakte in Verbindung mit dem Steckvorsprung vorteilhaft dafür, dass sie die Steckverbindung zwischen dem Verriegelungsaktuator und dem Lademodul unterstützen oder sogar gänzlich definieren.

Außerdem wird hierdurch insgesamt sichergestellt, dass das Lademodul mit der darin typischerweise vorgesehenen Steckbuchse an der Karosserie des Fahrzeuges im Zuge der Montage festgelegt werden kann. Die Steckbuchse des Lademoduls lässt sich bei diesem Vorgang mit entsprechenden Zuleitungen des Kabelbaumes zur Versorgung mit der Bordnetzspannung verbinden. Zu dem Zweck wird typischerweise ein das Lademodul in seinem Innern aufnehmendes Lademodulgehäuse an der betreffenden Karosserie festgelegt. Hierzu mag eine Vormontage gehören. Erst im Zuge der Endmontage oder grundsätzlich der Montage wird das Lademodulgehäuse mit dem Verriegelungsaktuatorgehäuse gekoppelt bzw. findet die erfindungsgemäß verfolgte Steckverbindung zwischen dem Verriegelungsaktuator und dem Lademodul statt.

Das Verriegelungsaktuatorgehäuse haust im Allgemeinen den motorischen Antrieb vorzugsweise abgedichtet ein. Erfindungsgemäß ist die Auslegung so getroffen, dass das Riegelelement unter Zwischenschaltung einer Dichtung das Verriegelungsaktuatorgehäuse durchgreift. Auf diese Weise wird der modulhafte Charakter des Verriegelungsaktuators unterstützt bzw. zur Verfügung gestellt, weil das Verriegelungsaktuatorgehäuse den motorischen Antrieb in seinem Innern aufnimmt und vorzugsweise abgedichtet einhaust und im Übrigen das Riegelelement unter Zwischenschaltung der Dichtung das Verriegelungsaktuatorgehäuse durchgreift. Dadurch kann das Verriegelungsaktuatorgehäuse inklusive Riegelelement durch eine simplen Steckvorgang mit dem Lademodul bzw. dem zugehörigen Lademodulgehäuse gekoppelt werden.

Zu diesem Zweck sind beide Gehäuse mit Füge- und/oder Verbindungshilfsmitteln ausgerüstet. Hierbei kann es sich um Bohrungen oder Durchgangslöcher in den jeweiligen Gehäusen handeln, durch welche Schrauben hindurchgeführt werden. Zusätzlich sind auch Führungen vorstellbar. Auf diese Weise wird die Steckverbindung zwischen den Steckkontakten und der Steckbuchse unterstützt bzw. realisiert.

Das unter Zwischenschaltung der Dichtung das Verriegelungsaktuatorgehäuse durchgreifende Riegelelement fährt zugleich in eine Öffnung im Lademodulgehäuse und folglich auch in der Ladesteckdose ein. Auf diese Weise kann das Riegelelement je nach seiner Position "verriegelt" oder "entriegelt" unmittelbar den in die Ladesteckdose eingesteckten Ladestecker verriegeln.

Das alles gelingt unter Berücksichtigung einer optimierten Fertigung und eines zeitverbesserten Montagevorganges. Denn das Lademodul bzw. das Lademodulgehäuse wird erfindungsgemäß an der Karosserie des Fahrzeuges bzw. Kraftfahrzeuges zunächst festgelegt und elektrisch mit dem Bordnetz verbunden. Erst im Zuge der Montage bzw. Endmontage wird dann das Lademodulgehäuse mit dem Verriegelungsaktuatorgehäuse gekoppelt. Für die steckbare Kopplung zwischen dem Lademodulgehäuse und dem Verriegelungsaktuatorgehäuse sorgen einerseits die in die Steckbuchse im Lademodul eingreifenden Steckkontakte des Verriegelungsaktuators und andererseits die miteinander wechselwirkenden Füge- und/oder Verbindungshilfsmittel.

Dadurch findet eine einwandfreie Zentrierung und Ausrichtung des Verriegelungsaktuators gegenüber dem Lademodul statt und wird sogleich bei dem Steckvorgang eine beschädigungsfreie Kontaktierung dergestalt zur Verfügung gestellt, dass die Steckkontakte am Verriegelungsaktuator in die zugehörige Steckbuchse im Lademodul ohne beispielsweise Abknicken eingreifen.

Hierdurch wird zugleich die erforderliche elektrische Verbindung des im Verriegelungsaktuator vorgesehenen motorischen Antriebs mit dem Bordnetz zur Verfügung gestellt, so dass die Verriegelungsvorrichtung im Anschluss an den beschriebenen Montagevorgang unmittelbar einsatzfähig ist. Das alles gelingt unter Berücksichtigung einer vereinfachten und zeitsparenden Montage. Hierin sind die wesentlichen Vorteile zu sehen.

Im Folgenden wird die Erfindung anhand einer lediglich ein Ausführungsbeispiel darstellenden Zeichnung näher erläutert; es zeigen:
- **Fig. 1 bis 3**: unterschiedliche Phasen eines Montagevorganges der erfindungsgemäßen Verriegelungsvorrichtung und
- **Fig. 4**: der Verriegelungsaktuator als Bestandteil der Verriegelungsvorrichtung perspektivisch.

In den Figuren ist eine Verriegelungsvorrichtung für eine elektrische Ladevorrichtung 1, 3, 4, 5 eines nicht näher dargestellten Kraftfahrzeuges dargestellt. Bei dem Kraftfahrzeug kann es sich um ein Elektro- oder Hybridkraftfahrzeug handeln. Die nachfolgend noch im Detail zu beschreibende elektrische Ladevorrichtung 1, 3, 4, 5 mag beispielsweise im Bereich einer Öffnung einer Karosserie des Kraftfahrzeuges montiert werden. Eine Ladesteckdose 3, die auch Inlett genannt wird, kann beispielsweise hinter einer Ladeklappe im Kraftfahrzeug angeordnet sein, so dass die Ladesteckdose 3 für einen Bediener leicht zugänglich ist.

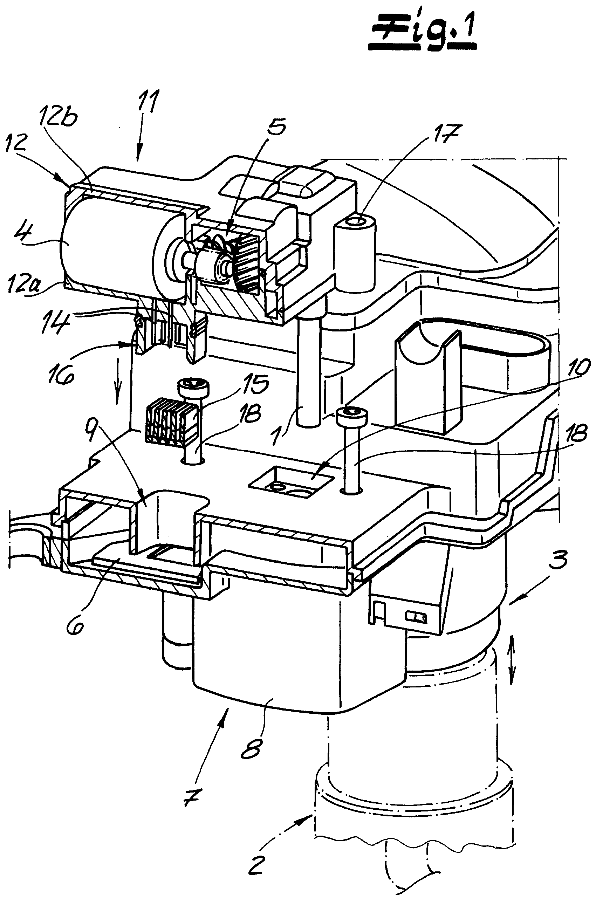

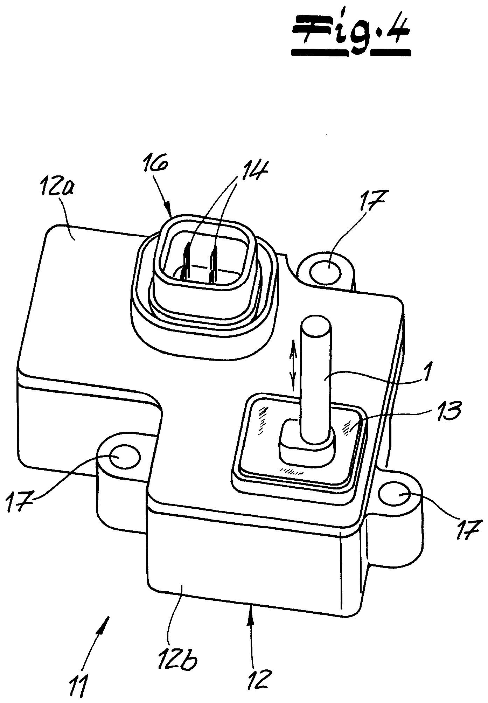

Die kraftfahrzeugseitig realisierte elektrische Ladevorrichtung 1, 3, 4, 5 verfügt zunächst einmal über ein verfahrbares Riegelelement 1, welches man insbesondere in der Fig. 4 erkennt. Mit Hilfe des verfahrbaren Riegelelementes 1 kann ein lediglich in der Fig. 1 angedeuteter Ladestecker 2 gegenüber einer Ladesteckdose 3 der elektrischen Ladevorrichtung 1, 3, 4, 5 lösbar verriegelt werden. Zu diesem Zweck ist ein motorischer Antrieb 4, 5 vorgesehen, mit dessen Hilfe das als Riegelzapfen im Ausführungsbeispiel ausgebildete Riegelelement 1 verstellt werden kann, und zwar im Rahmen des Ausführungsbeispiels und der Darstellung in der Fig. 4 folgend in der dort durch einen Doppelpfeil angedeuteten Linearrichtung.

Der motorische Antrieb 4, 5 setzt sich größtenteils aus einem Elektromotor 4 und einem daran angeschlossenen Getriebe 5 zur Beaufschlagung des Riegelelementes 1 zusammen. Das Getriebe 5 kann zu diesem Zweck so ausgelegt sein, dass ein nicht näher dargestellter Zapfen in eine Gabelaufnahme des Riegelelementes 1 eingreift und auf diese Weise die ausgangsseitigen Drehbewegungen einer Abtriebswelle des Elektromotors 4 in die in der Fig. 4 dargestellten linearen Stellbewegungen des Riegelelementes 1 umwandelt. Tatsächlich kann das Riegelelement 1 im Wesentlichen die Positionen bzw. Funktionsstellungen "verriegelt" und "entriegelt" einnehmen, wie dies einleitend bereits im Detail beschrieben worden ist. In der Stellung "verriegelt" sorgt das Riegelelement 1 dafür, dass der beispielsweise an eine Ladesäule über ein in der Fig. 1 lediglich angedeutetes Netzverbindungskabel angeschlossene Ladestecker 2 innerhalb der Ladesteckdose 3 verriegelt wird. Der Zustand "entriegelt" korrespondiert demgegenüber dazu, dass der Ladestecker 2 aus der Ladesteckdose 3 entnommen und herausgezogen werden kann.

Die dargestellte elektrische Ladevorrichtung 1, 3, 4, 5 setzt sich erfindungsgemäß im Wesentlichen aus zwei Hauptbestandteilen zusammen. Zunächst einmal ist ein Lademodul 7 vorgesehen, welches nach dem Ausführungsbeispiel im Wesentlichen die Ladesteckdose 3 umfasst. Das Lademodul 7 ist mit einem Lademodulgehäuse 8 ausgerüstet, welches im Rahmen der Darstellung geschlossen ausgebildet ist und die Ladesteckdose 3 sowie zugehörige Verbindungsleitungen und auch eine Leiterplatte bzw. Leiterplatine 6 eines Steuergerätes der Ladesteckdose 3 und andere Einbauteile einhaust. Das Lademodulgehäuse 8 ist bis auf zwei Aufnahmen 9, 10 geschlossen ausgebildet.

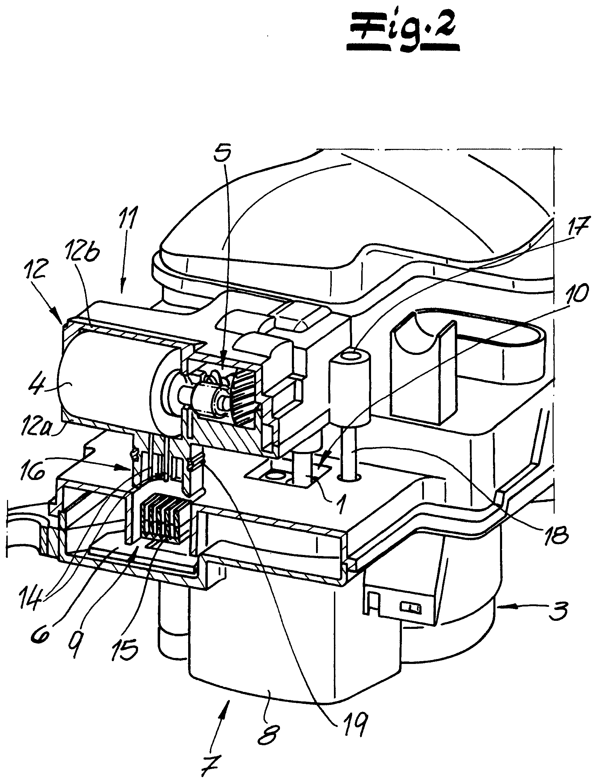

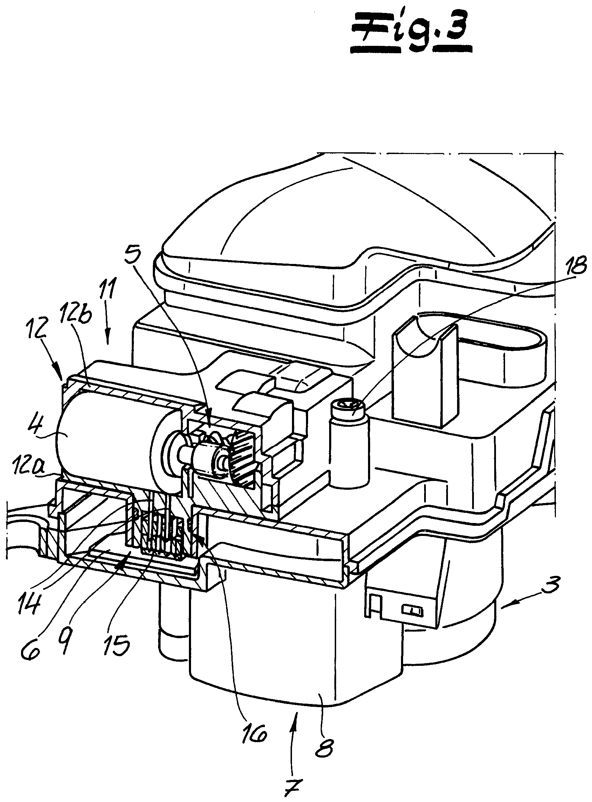

Als weiterer und zweiter Hauptbestandteil der Ladevorrichtung 1, 3, 4, 5 ist ein Verriegelungsaktuator 11 vorgesehen. Der Verriegelungsaktuator 11 weist im Ausführungsbeispiel neben dem motorischen Antrieb 4, 5 zusätzlich das Riegelelement 1 auf. Außerdem lässt sich der Verriegelungsaktuator 11 mit dem Lademodul 7 im Zuge der Montage verbinden. Das erfolgt über einen überwiegend linearen Steckvorgang, wie er in der Fig. 1 durch einen Pfeil dargestellt ist und beim Übergang zu den Fig. 2 und 3 deutlich wird.

Zu diesem Zweck ist der Verriegelungsaktuator 11 mit einem Verriegelungsaktuatorgehäuse 12 ausgerüstet. Nach dem Ausführungsbeispiel ist das Verriegelungsaktuatorgehäuse 12 mit zwei Gehäusehälften 12a, 12b versehen, die insgesamt einerseits den Elektromotor 4 und andererseits das Getriebe 5 einhausen. Tatsächlich sorgt das Verriegelungsaktuatorgehäuse 12 dafür, dass der motorische Antrieb 4, 5, das heißt der Elektromotor 4, das Getriebe 5, abgedichtet eingehaust werden. Das Riegelelement 1 ist in diesem Zusammenhang unter Zwischenschaltung einer insbesondere in der Fig. 4 zu erkennenden und in das Verriegelungsaktuatorgehäuse 12 eingelassenen Dichtung 13 verschieblich und dichtend gehalten. Dabei durchgreift das Riegelelement 1 unter Zwischenschaltung der bereits angesprochenen Dichtung 13 das Verriegelungsaktuatorgehäuse 12, so dass insgesamt der Elektromotor 4 und auch das Getriebe 5 inklusive dem im Verriegelungsaktuatorgehäuse 12 gelagerten Riegelelement 1 hierin dichtend aufgenommen werden. Vorzugsweise ist die Dichtung 13 als Dichtpad und noch bevorzugter als Dichtscheibe ausgebildet.

Der Verriegelungsaktuator 11 ist darüber hinaus mit Steckkontakten oder Pins 14 ausgerüstet. Die Steckkontakte 14 sind mit dem Elektromotor 4 elektrisch verbunden und sorgen dafür, dass der Elektromotor 4 das Getriebe 5 entsprechend beaufschlagt, um die zuvor bereits angesprochenen grundsätzlichen Positionen "entriegelt" und "verriegelt" des Riegelelementes 1 darstellen zu können. Bei der Montage greifen die fraglichen Steckkontakte 14 des Verriegelungsaktuators 11 in eine zugehörige Steckbuchse 15 im Lademodul 7 ein. Zu diesem Zweck werden die Steckkontakte 14 in einem Steckvorsprung 16 des Verriegelungsaktuatorgehäuses 12 aufgenommen. Der Steckvorsprung 16 taucht beim Steckvorgang zwischen dem Verriegelungsaktuator 11 und dem Lademodul 7 in die Aufnahme 9 des Lademodulgehäuses 8 ein. Eine in diesem Zusammenhang zusätzlich vorgesehene Dichtung 19 sorgt hierbei für eine Abdichtung. Die Dichtung 19 ist dazu als 3-fach-Lippendichtung ausgebildet.

Auf diese Weise sorgen zugleich die in die Steckbuchse 15 eintauchenden Steckkontakte 14 dafür, dass der Steckvorgang unterstützt wird. Zugleich werden hierdurch die Steckkontakte 14 mit der zur Ladesteckdose 3 zugehörigen Leiterplatte bzw. Leiterplatine 6 des Steuergerätes elektrisch gekoppelt, die ihrerseits die Steckbuchse 15 trägt.

Die weitere Aufnahme 10 im Lademodulgehäuse 8 sorgt dafür, dass bei dem beschriebenen Steckvorgang das Riegelelement 1 in das Lademodulgehäuse 8 eintauchen kann, um im Anschluss daran für die gewünschte Ver- und Entriegelung des Ladesteckers 2 gegenüber der Ladesteckdose 3 sorgen zu können. Der eigentliche Steckvorgang wird dann noch dadurch unterstützt, dass für die Steckkopplung beider Gehäuse 8, 12, d. h. des Verriegelungsaktuatorgehäuses 12 und auch des Lademodulgehäuses 8, zusätzlich noch Füge- und/oder Verbindungshilfsmittel 17, 18 verantwortlich zeichnen. Bei den Füge- und/oder Verbindungshilfsmitteln 17, 18 handelt es sich im Rahmen des Ausführungsbeispiels um eine Bohrung bzw. mehrere Bohrungen 17 und eine oder mehrere Schrauben 18, die miteinander verbunden werden. Tatsächlich sind nach dem Ausführungsbeispiel insgesamt drei Schraubverbindungen 18 vorgesehen.

Natürlich können aus der Ladesteckdose 3 auch Stifte und/oder Gewinde herausstehen, so dass der Verriegelungsaktuator 11 unter Rückgriff auf die Füge- und/oder Verbindungshilfsmittel 17, 18 mit dem Lademodul 7 und folglich der Ladesteckdose 3 verbindbar ist. Auf jeden Fall ist bei der Art der Verbindung zu beachten, dass eine sichere Verbindung der Steckkontakte 14 mit der zugehörigen Steckbuchse 15 gewährleistet und zusätzlich ein möglichst reibungs-, verklemm- und/oder verkippfreies Führen des Riegelelementes 1 gewährleistet wird.

### Bezugszeichenliste

- 1: Riegelelement
- 2: Ladestecker
- 3: Ladesteckdose
- 4: Elektromotor
- 5: Getriebe
- 6: Zuleitung
- 7: Lademodul
- 8: Lademodulgehäuse
- 9, 10: Aufnahme
- 11: Verriegelungsaktuator
- 12: Verriegelungsaktuatorgehäuse
- 12a, 12b: Gehäusehälfte
- 13: Dichtung
- 14: Steckkontakt
- 15: Steckbuchse
- 16: Steckvorsprung
- 17: Steckaufnahme
- 18: Steckzapfen
- 19: Dichtung

## Patentansprüche

1. Verriegelungsvorrichtung für eine elektrische Ladevorrichtung (1, 3, 4, 5) eines Kraftfahrzeuges, insbesondere eines Elektro- oder Hybridkraftfahrzeuges, mit einem verfahrbaren Riegelelement (1), das dazu vorgesehen ist, einen Ladestecker (2) in einer Ladesteckdose (3) der elektrischen Ladevorrichtung (1, 3, 4, 5) lösbar zu verriegeln, und mit einem motorischen Antrieb (4, 5) zur Verstellung des Riegelelementes (1),
wobei
der motorische Antrieb (4, 5) als Bestandteil eines mit einem Lademodul (7) im Zuge der Montage verbindbaren modulartigen Verriegelungsaktuators (11) ausgebildet ist, wobei der Verriegelungsaktuator (11) neben dem motorischen Antrieb (4, 5) zusätzlich das Riegelelement (1) aufweist, wobei das Riegelelement (1) unter Zwischenschaltung einer in ein Verriegelungsaktuatorgehäuse (12) eingelassenen Dichtung (13) verschieblich und dichtend gehalten ist, wobei der Verriegelungsaktuator (11) mit Steckkontakten (14) ausgerüstet ist, welche im Zuge der Montage in zumindest eine zugehörige Steckbuchse (15) im Lademodul (7) eingreifen, oder umgekehrt, wobei die Steckkontakte (14) in einem Steckvorsprung (16) des Verriegelungsaktuatorgehäuses (12) angeordnet sind, wobei der Steckvorsprung (16) bei einem Steckvorgang zwischen dem Verriegelungsaktuator (11) und dem Lademodul (7) in eine Aufnahme (9) des Lademodulgehäuses (8) eintaucht, wobei eine zusätzlich vorgesehene Dichtung (19) hierbei für eine Abdichtung sorgt.

2. Vorrichtung nach Anspruch 1, **dadurch gekennzeichnet, dass** das Verriegelungsaktuatorgehäuse (12) den motorischen Antrieb (4, 5) vorzugsweise abgedichtet einhaust.

3. Vorrichtung nach Anspruch 1 oder 2, **dadurch gekennzeichnet, dass** zur Kopplung beider Gehäuse (8, 12) Füge- und/oder Verbindungshilfsmittel (17, 18) vorgesehen sind.

4. Vorrichtung nach Anspruch 1, **dadurch gekennzeichnet, dass** das Lademodulgehäuse (8) an einer Karosserie eines Fahrzeuges festgelegt ist und im Zuge der Montage mit dem Verriegelungsaktuatorgehäuse (12) gekoppelt wird.

## Claims

1. A locking device for an electric charging device (1, 3, 4, 5) of a motor vehicle, in particular of an electric or hybrid motor vehicle, having a movable bolt element (1), which is provided for releasably locking a charging plug (2) in a charging socket (3) of the electric charging device (1, 3, 4, 5), and having a motor drive (4, 5) for moving the bolt element (1),
wherein the motor drive (4, 5) is designed as a component of a modular locking actuator (11) that can be connected to a charging module (7) in the course of assembly, wherein the locking actuator (11) additionally has the bolt element (1) in addition to the motor drive (4, 5), wherein the bolt element (1) is held in a displaceable and sealing manner with the interposition of a seal (13) recessed into a locking actuator housing (12), wherein the locking actuator (11) is equipped with plug-in contacts (14), which, in the course of assembly, engage in at least one associated plug-in socket (15) in the charging module (7), or vice versa, wherein the plug-in contacts (14) are arranged in a plug-in projection (16) of the locking actuator housing (12), wherein the plug-in projection (16) enters a receptacle (9) of the charging module housing (8) during a plug-in operation between the locking actuator (11) and the charging module (7), wherein an additionally provided seal (19) ensures a sealing in this case.

2. The device according to claim 1, **characterized in that** the locking actuator housing (12) encloses the motor drive (4, 5), preferably in a sealed manner.

3. The device according to claim 1 or 2, **characterized in that** joining and/or connecting aids (17, 18) are provided for coupling the two housings (8, 12).

4. The device according to claim 1, **characterized in that** the charging module housing (8) is fixed to a body of a vehicle and is coupled to the locking actuator housing (12) in the course of assembly.

## Revendications

1. Dispositif de verrouillage pour un dispositif de charge électrique (1, 3, 4, 5) d'un véhicule automobile, en particulier d'un véhicule automobile électrique ou hybride, comportant un élément formant verrou (1) mobile qui est prévu pour verrouiller de manière amovible une fiche de charge (2) dans une prise de charge (3) du dispositif de charge électrique (1, 3, 4, 5), et comportant un entraînement motorisé (4, 5) permettant de déplacer l'élément formant verrou (1), dans lequel l'entraînement motorisé (4, 5) est conçu en tant que pièce d'un actionneur de verrouillage (11) de type modulaire pouvant être relié à un module de charge (7) au cours du montage, dans lequel l'actionneur de verrouillage (11) présente en outre, outre l'entraînement motorisé (4, 5), l'élément formant verrou (1), dans lequel l'élément formant verrou (1) est maintenu de manière à pouvoir coulisser et de manière étanche par intercalation d'un joint (13) encastré dans un boîtier d'actionneur de verrouillage (12), dans lequel l'actionneur de verrouillage (11) est équipé de contacts enfichables (14) qui, au cours du montage, viennent en prise dans au moins une douille d'enfichage correspondante (15) dans le module de charge (7), ou inversement, dans lequel les contacts enfichables (14) sont disposés dans une saillie enfichable (16) du boîtier d'actionneur de verrouillage (12), dans lequel la saillie enfichable (16) pénètre, lors d'un processus d'enfichage, dans un logement (9) du boîtier de module de charge (8) entre l'actionneur de verrouillage (11) et le module de charge (7), dans lequel un joint (19) prévu en supplément assure ici une étanchéité.

2. Dispositif selon la revendication 1, **caractérisé en ce que** le boîtier d'actionneur de verrouillage (12) abrite l'entraînement motorisé (4, 5) de préférence de manière étanche.

3. Dispositif selon la revendication 1 ou 2, **caractérisé en ce que** des moyens auxiliaires d'assemblage et/ou de liaison (17, 18) sont prévus pour l'accouplement des deux boîtiers (8, 12).

4. Dispositif selon la revendication 1, **caractérisé en ce que** le boîtier de module de charge (8) est fixé sur une carrosserie d'un véhicule et est accouplé au boîtier d'actionneur de verrouillage (12) au cours du montage.
